(19) Europäisches Patentamt
European Patent Office
Office européen des brevets

(11) **EP 1 759 448 B1**

(12) **EUROPÄISCHE PATENTSCHRIFT**

(45) Veröffentlichungstag und Bekanntmachung des Hinweises auf die Patenterteilung:
**19.08.2009 Patentblatt 2009/34**

(21) Anmeldenummer: **05773948.4**

(22) Anmeldetag: **21.06.2005**

(51) Int Cl.:
*H02M 1/32* *(2007.01)*   *H02M 5/458* *(2006.01)*

(86) Internationale Anmeldenummer:
**PCT/EP2005/052896**

(87) Internationale Veröffentlichungsnummer:
**WO 2006/000558 (05.01.2006 Gazette 2006/01)**

(54) **VERFAHREN ZUR ERMITTLUNG DES RISIKOS FÜR EINEN STÖRUNGSFREIEN BETRIEB EINES FREQUENZUMRICHTERS**

METHOD FOR DETERMINING THE CHANCE OF A DISTURBANCE-FREE OPERATION OF A FREQUENCY CONVERTER

PROCEDE POUR DETERMINER LA CHANCE D'UN FONCTIONNEMENT SANS ENTRAVE D'UN CONVERTISSEUR DE FREQUENCE

(84) Benannte Vertragsstaaten:
**DE FR GB**

(30) Priorität: **24.06.2004 DE 102004030536**

(43) Veröffentlichungstag der Anmeldung:
**07.03.2007 Patentblatt 2007/10**

(60) Teilanmeldung:
**07023384.6 / 1 892 820**

(73) Patentinhaber: **SIEMENS AKTIENGESELLSCHAFT**
**80333 München (DE)**

(72) Erfinder: **Schierling, Hubert**
**91052 Erlangen (DE)**

(56) Entgegenhaltungen:
EP-A- 0 370 500    DE-A1- 19 924 550
US-A1- 2005 258 795

- **BARROS J ET AL: "Measurement and analysis of voltage events in a low-voltage distribution network" ELECTROTECHNICAL CONFERENCE, 2004. MELECON 2004. PROCEEDINGS OF THE 12TH IEEE MEDITERRANEAN DUBROVNIK, CROATIA 12-15 MAY 2004, PISCATAWAY, NJ, USA,IEEE, US, 12. Mai 2004 (2004-05-12), Seiten 1083-1086, XP010734918 ISBN: 0-7803-8271-4**
- **DURAN GOMEZ J L ET AL: "A low cost approach to improve the performance of an adjustable speed drive (ASD) under voltage sags and short-term power interruptions" 12. Oktober 1998 (1998-10-12), POWER ELECTRONICS CONGRESS, 1998. CIEP 98. VI IEEE INTERNATIONAL MORELIA, MEXICO 12-15 OCT. 1998, PISCATAWAY, NJ, USA,IEEE, US, PAGE(S) 16-21 , XP010324595 ISBN: 0-7803-5006-5 das ganze Dokument**
- **MONTANO J C ET AL: "Power quality factor and line-disturbances measurements in three-phase systems" POWER ELECTRONICS SPECIALISTS CONFERENCE, 2004. PESC 04. 2004 IEEE 35TH ANNUAL AACHEN, GERMANY 20-25 JUNE 2004, PISCATAWAY, NJ, USA,IEEE, US, 20. Juni 2004 (2004-06-20), Seiten 4084-4088, XP010739396 ISBN: 0-7803-8399-0**

**Beschreibung**

Die Erfindung bezieht sich auf ein Verfahren zur Ermittlung einer Kennziffer für die Qualität eines einen Frequenzumrichter speisenden Netzes.

Bei Frequenzumrichtern, insbesondere bei solchen, bei denen Diodengleichrichter zur Speisung eines Gleichspannungs-Zwichenkreises eingesetzt werden, können Fehler im speisenden Netz zu Störabschaltungen und sogar zur Zerstörung des Frequenzumrichters führen.

Beispielsweise verursachen Spannungseinbrüche im speisenden Netz des Frequenzumrichters Drehmomenteinbrüche an vom Frequenzumrichter gespeisten Motor. Kehrt die Netzspannung anschließend mit großer Steilheit wieder, kann es zu Überspannungen im Gleichspannungs-Zwischenkreis des Frequenzumrichters oder zu motorseitigen Überströmen kommen. Die Gleichrichterdioden des netzseitigen Stromrichters des Frequenzumrichters werden durch ein schnelles Wiederaufladen des Zwischenkreiskondensators des Frequenzumrichters stark belastet. Treten Spannungseinbrüche mit anschließender Spannungswiederkehr mit großer Steilheit mehrfach hintereinander auf, so werden die Gleichrichterdioden infolge überhöhter Temperatur zerstört, womit der Frequenzumrichter ausfällt. Sehr hohe Netzspannungen können zu Überspannungsabschaltung oder zur Zerstörung des Frequenzumrichters führen.

Bisher schaltet ein an einem speisenden Netz angeschlossener Frequenzumrichter ab, wenn ein zulässiger oberer bzw. unterer Grenzwert für die Zwischenkreisspannung des Frequenzumrichters über- bzw. unterschritten wird oder der Motorstrom zu groß wird. Bei manchen im Handel erhältlichen Frequenzumrichtern wird zusätzlich der Ausfall einer Netzphase des speisenden Netzes erkannt und als Abschaltkriterium herangezogen.

Da es für die Störmeldungen "Überspannung" und "Überstrom" viele Ursachen geben kann und der Fehler in aller Regel nicht unmittelbar reproduzierbar ist, wird die Netzspannung des speisenden Netzes als Auslöser für eine Abschaltung des Frequenzumrichters nur schwer erkannt. Wenn ein Frequenzumrichter mehrfach mit einer Störmeldung "Überspannung" bzw. "Überstrom" ausgefallen ist, für die es keine applikations- oder gerätespezifische Erklärung gibt, wird vom Service-Ingenieur die Netzspannung des speisenden Netzes mittels eines Schreibers, insbesondere eines Langzeitschreibers, aufgezeichnet und anschließend ausgewertet.

Beispiele solcher Aufzeichnungen und Auswertungen können aus der Veröffentlichung "Measurement and Analysis of Voltage events in a Low-Voltage Distribution Network" von Barros J. et al entnommen werden.

Da ein nicht stabiles Netz immer ein Risiko für den sicheren Betrieb eines Frequenzumrichters und damit für eine Anlage darstellt, wäre es für einen Betreiber einer Anlage mit frequenzumrichtergespeisten Motoren sehr hilfreich, wenn jeder Frequenzumrichter die Qualität seines speisenden Netzes feststellen und bei Erreichen eines Gefährdungspotentials eine entsprechende Meldung abgeben könnte. Dadurch könnten unter Umständen kostenintensive Betriebsunterbrechungen verhindert werden.

Der Erfindung liegt nun die Aufgabe zugrunde, ein Verfahren anzugeben, mit dem eine Kennziffer für die Qualität eines einen Frequenzumrichter speisenden Netzes ermittelt werden kann.

Diese Aufgabe wird erfindungsgemäß mit den Merkmalen des Anspruchs 1 gelöst.

Erfindungsgemäß werden Messgrößen eines Frequenzumrichters, die bereits für Regelungs- und Schutzzwecke des Frequenzumrichters vorhanden sind, hinsichtlich Über- und Unterschreitungen vorbestimmter Betriebswerte erfasst und abgespeichert, so dass die Anzahlen aller Über- und Unterschreitungen ermittelt werden können, aus der auf die Qualität des Netzes und damit auf das Risiko für einen störungsfreien Betrieb des Frequenzumrichters geschlossen werden kann. Zu diesen Messgrößen gehören die Zwischenkreisspannung und der netzseitige Zwischenkreisstrom. Beispielsweise kann dieser netzseitige Zwischenkreisstrom in Abhängigkeit der Zwischenkreisspannung des motorseitigen Zwischenkreisstromes und der Zwischenkreiskapazität berechnet werden.

Eine Netzunterspannung wird anhand der gemessenen Zwischenkreisspannung erkannt, eine Netzüberspannung anhand der gemessenen Zwischenkreisspannung und einem positiven netzseitigen Zwischenkreisstrom. Zur Identifizierung eines Netzüberstromes dient der netzseitige Zwischenkreisstrom. Um diese Fehler zu erkennen, sind Betriebswerte des Frequenzumrichters vorbestimmt. Werden diese Betriebswerte über- oder unterschritten, werden diese über einen vorgegebenen Zeitraum gespeichert. Um eine Kennziffer für die Qualität eines einen Frequenzumrichter speisenden Netzes und damit das Risiko für einen störungsfreien Betrieb dieses Frequenzumrichters zu ermitteln, wird die Anzahl der Über- und Unterschreitungen aller Messgrößen ermittelt.

Um den Messbereich zwischen normalen Betriebsbereich und Abschaltbereich zu differenzieren, ist dieser Bereich vorteilhafterweise in mehrere Bereiche unterteilt. Damit kann festgehalten werden, wie hoch eine Über- oder Unterschreitung einer Messgröße war, ohne dass der Wert an sich gespeichert werden muss. Somit erhält man für jede Messgröße eine Ansammlung von Über- und Unterschreitungen, die auf mehrere Messbereiche verteilt sind.

Da eine Über- bzw. Unterschreitung einer Messgröße beispielsweise in einem ersten Messbereich und beispielsweise in einem Abschaltbereich unterschiedlich gravierend sind, werden vorteilhafterweise alle Häufigkeiten für alle überwachten Messgrößen unterschiedlich bewertet. Dazu werden unterschiedliche Gewichtungsfaktoren verwendet.

All diese gewichteten Häufigkeiten aller überwachten Messgrößen werden zu einer einzigen Kennziffer aufaddiert. Je höher diese Kennziffer ist, um so mehr Über- und/oder Unterschreitungen sind in einem vorbestimmten Zeitraum aufgetreten. D.h., dass die Netzqualität mit dem Anstieg der Kennziffer abnimmt. Je schlechter die Netzqualität ist, um so höher ist das Risiko für einen ungestörten Betrieb eines Frequenzumrichters an einem solchen Netz. Um einen Wert für die Netzqualität angeben zu können, wird diese ermittelte Kennziffer umgerechnet. Dazu bietet sich der Kehrwert mit Begrenzung oder die Substraktion von einem konstanten Wert an.

Vorteilhafterweise kann auch eine Warnmeldung generiert werden, so bald die ermittelte Kennziffer einen vorbestimmten Wert unterschreitet.

Mit diesem erfindungsgemäßen Verfahren wird die Gefahr von Gerätestörungen oder -ausfällen infolge von Netzstörungen erkannt, noch bevor es zu einer Betriebsunterbrechung kommt. Dadurch wird die Anzahl der Ausfälle eines an einem Netz angeschlossenen Frequenzumrichters mit den damit verbundenen Nachteilen wie Kosten und Imageverlust reduziert. Störungen aufgrund von Netzfehlern werden somit schneller gefunden. Mit diesem erfindungsgemäßen Verfahren ist ein Frequenzumrichter in der Lage, die Qualität eines speisenden Netzes und damit das Risiko für den ungestörten Betrieb des Antriebs (Frequenzumrichter mit angeschlossenen Motor) ständig während des laufenden Betriebes zu ermitteln und gegebenenfalls anzuzeigen.

Zur weiteren Erläuterung der Erfindung wird auf die Zeichnung Bezug genommen, in der das erfindungsgemäße Verfahren schematisch veranschaulicht ist.

FIG 1    zeigt einen Frequenzumrichter mit Diodeneinspeisung an einem speisenden Netz, in der
FIG 2    ist eine Einteilung eines Messgrößenbereichs einer Messgröße in mehrere Abschnitte dargestellt, die
FIG 3    zeigt ein Histogramm einer Messgröße, in der

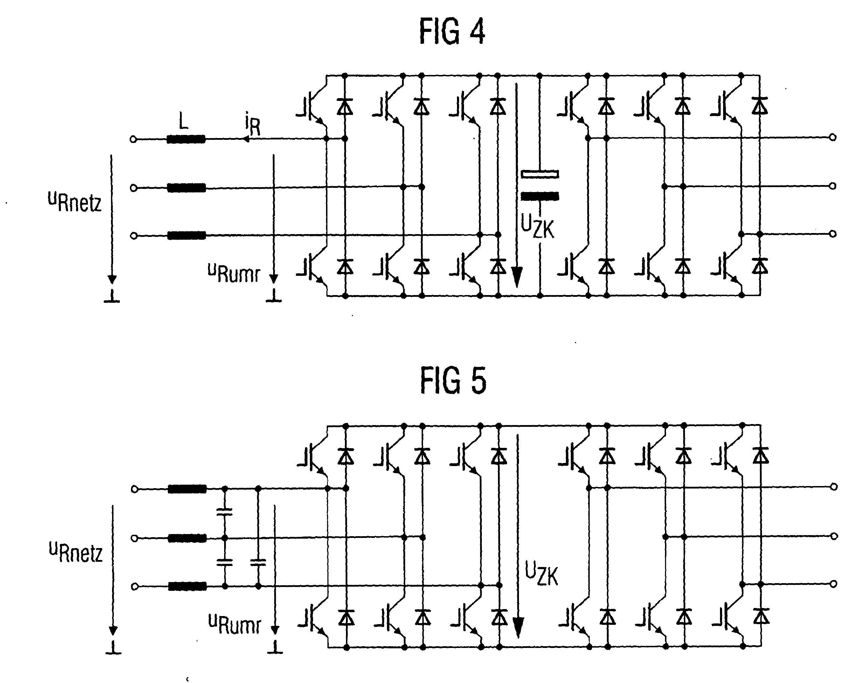

FIG 4    ist ein Frequenzumrichter mit einem Activ-Front-End dargestellt, wobei die
FIG 5    einen Frequenzumrichter mit einem mit Netzfrequenz getakteten netzseitigen rückspeisefähigen Stromrichter zeigt, und in der
FIG 6    ist ein Matrixumrichter dargestellt.

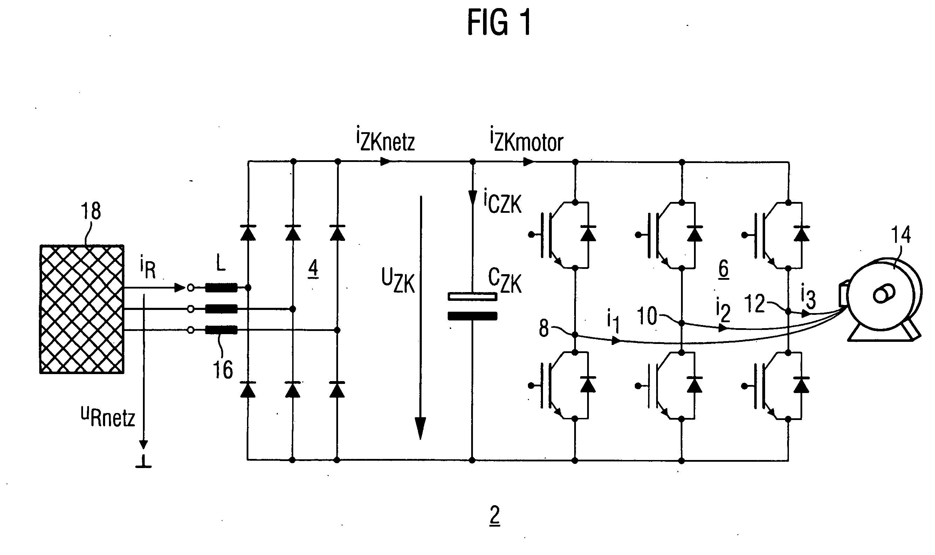

Die FIG 1 zeigt ein Ersatzschaltbild eines Frequenzumrichters 2, der als netzseitigen Stromrichter einen Diodengleichrichter 4 und als lastseitigen Stromrichter einen selbstgeführten Pulsstromrichter 6 aufweist. Beide Stromrichter sind gleichspannungsseitig mittels eines Gleichspannungs-Zwischenkreises elektrisch miteinander verknüpft. Dieser Gleichspannungs-Zwischenkreis weist einen Zwischenkreiskondensator $C_{ZK}$ auf, an dem eine Zwischenkreisspannung $U_{ZK}$ abfällt. An den Phasen-Ausgängen 8, 10 und 12 des selbstgeführten Pulsstromrichters 6 ist ein Motor 14 angeschlossen. Motor 14 und Frequenzumrichter 2 bilden einen sogenannten Antrieb. Eingangsseitig weist dieser Frequenzumrichter 2 eine Netzkommutierungsdrossel 16, die für jede Netzphase eine Induktivität L beinhaltet, auf. Mittels dieser Netzkommutierungsdrossel 16 ist dieser Frequenzumrichter 2 an ein speisendes Netz 18 angeschlossen.

Der Diodengleichrichter 4 generiert aus den anstehenden Phasenspannungen $U_{Rnetz}$, $U_{Snetz}$, und $U_{Tnetz}$ des speisenden Netzes 18 eine gleichgerichtete Spannung, die Zwischenkreisspannung $U_{ZK}$, die mittels des Zwischenkreiskondensators $C_{ZK}$ gepuffert wird. Außerdem liefert dieser Diodengleichrichter 4 einen Zwischenkreisstrom $i_{ZKnetz}$, der sich aus den Phasenströmen $i_R$; $i_S$ und $i_T$ des speisenden Netzes 18 zusammensetzt. Dieser netzseitige Zwischenkreisstrom $i_{ZKnetz}$ teilt sich in einen Ladestrom $i_{CZK}$ des Zwischenkreiskondensators $C_{ZK}$ und einen lastseitigen Zwischenkreisstromes $i_{ZKmotor}$ auf. Aus Übersichtlichkeitsgründen sind von den Phasenspannungen $U_{Rnetz}$, $U_{Snetz}$ und $U_{Tnetz}$ und den Phasenströmen $i_R$, $i_S$ und $i_T$ nur die der Phase R dargestellt.

Da der Wert der Zwischenkreisspannung $U_{ZK}$ direkt von der Amplitude der Netzspannung abhängig ist, macht sich ein Spannungseinbruch direkt in der Zwischenkreisspannung $U_{ZK}$ bemerkbar. Unterschreitet die Amplitude der Zwischenkreisspannung $U_{ZK}$ einen unteren vorbestimmten Wert, so schaltet der Frequenzumrichter 2 ab. Steigt nach einem Spannungseinbruch die Netzspannung wieder auf ihren ursprünglichen Wert, so fließt ein erhöhter netzseitiger Zwischenkreisstrom $i_{ZKnetz}$. Je steiler der Spannungsanstieg ist, um so höher ist der netzseitige Zwischenkreisstrom $i_{ZKnetz}$. D.h., die Qualität des speisenden Netzes 18 bestimmt somit das Risiko für einen störungsfreien Betrieb des Frequenzumrichters 2. Je mehr Spannungseinbrüche und Netzüberströme auftreten, um so niedriger ist die Qualität des speisenden Netzes 18. Je niedriger die Qualität des speisenden Netzes 18 des Frequenzumrichters 2 ist, um so höher ist das Risiko für einen störungsfreien Betrieb des Frequenzumrichters 2. Somit hat die Qualität eines Netzes 18 einen wesentlichen Einfluss auf den störungsfreien Betrieb eines Frequenzumrichters 2 und damit eines Antriebs.

Für Regelungs- und Schutzzwecke werden die Zwischenkreisspannung $U_{ZK}$ und die Motorströme $i_1$, $i_2$ und $i_3$ gemessen. Ohne weitere Messgrößen gelangt man mit Hilfe von Gleichungen zum motorseitigen und netzseitigen Zwischenkreisstrom $i_{ZKmotor}$ und $i_{ZKnetz}$. Mit Hilfe dieser gemessenen Motorströme $i_1$, $i_2$ und $i_3$ und den Ausgangsspan- nungen des selbstgeführten Pulsstromrichters 6 wird die Motorleistung gemäß folgender Gleichung:

$$P_{motor} = u_1 \cdot i_1 + u_2 \cdot i_2 + u_3 \cdot i_3 \qquad (1)$$

berechnet. Diese Ausgangsspannung $u_1$, $u_2$ und $u_3$ des Frequenzumrichters 2 brauchen nicht gemessen zu werden, da die Regeleinrichtung des Frequenzumrichters 2 die Sollwerte dieser Ausgangsspannungen liefert. In Abhängigkeit dieser berechneten Motorleistung $P_{motor}$ und der gemessenen Zwischenkreisspannung $U_{ZK}$ gelangt man mittels folgender Gleichung:

$$i_{ZKmotor} = P_{motor}/U_{ZK} \qquad (2)$$

zum Wert des motorseitigen Zwischenkreisstromes $i_{ZKmotor}$. Der netzseitige Zwischenkreisstrom $i_{ZKnetz}$ ergibt sich aus der Knotenregel zu:

$$i_{ZKnetz} = i_{CZK} + i_{ZKmotor} \qquad (3)$$

wobei der Ladestrom $i_{CZK}$ gemäß folgender Gleichung:

$$i_{CZK} = C_{zk} \cdot dU_{ZK}/dt \qquad (4)$$

berechnet wird. Somit erhält man aus vorhandenen Messgrößen mit einigen einfachen Rechenoperationen zwei Messgrößen, die hinsichtlich Netzstörungen des speisenden Netzes 18 ausgewertet werden können. Die vorhandenen Messgrößen $U_{ZK}$ und $i_1$, $i_2$ und $i_3$ und $u_1$ $u_2$ und $u_3$ stehen zu jeden Abtastschritt während des gesamten Betriebes zur Verfügung.

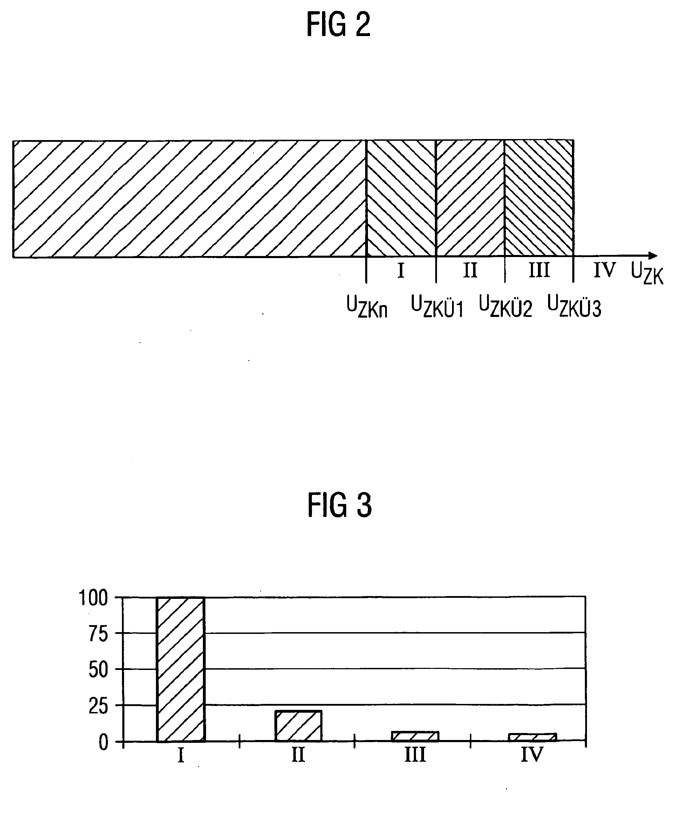

Die FIG 2 zeigt für eine Messgröße, hier die Zwischenkreisspannung $U_{ZK}$, den Messgrößenbereich, der in mehrere Abschnitte unterteilt ist. Da hier nur der Bereich oberhalb des normalen Betriebsbereiches interessiert, ist dieser Bereich in vier Abschnitte I, II, III und IV unterteilt. Der Abschnitt IV kennzeichnet einen Bereich, in dem der Frequenzumrichter 2 wegen zu hoher Zwischenkreisspannung $U_{ZK}$ abgeschaltet wird. Der Bereich zwischen diesen Abschaltbereich und dem normalen Betriebsbereich ist in drei Abschnitte I, II und III unterteilt, wodurch man eine Staffelung der Überspannung der Zwischenkreisspannung $U_{ZK}$ erhält. Durch die Verwendung von Abschnitte I bis IV müssen keine Spannungswerte abgespeichert werden. Für jeden Abschnitt I bis IV wird lediglich die Anzahl der Abtastschritte gezählt, in denen sich der Wert der Messgröße Zwischenkreisspannung $U_{ZK}$ innerhalb dieses Abschnitts I bzw. II bzw. III bzw. IV befand.

Für den Bereich der zu niedrigen Zwischenkreisspannung wird in ähnlicher Weise verfahren.

In der FIG 3 ist in einem Histogramm jeweils die Anzahl der Abtastschritte der Abschnitte I bis IV schematisch dargestellt. Dieses Histogramm zeigt beispielsweise die Anzahl der Ereignisse - Überschreitung der Zwischenkreisspannung $U_{ZKn}$ für den normalen Betriebsbereich - pro Tag. Mit Ablauf des Tages werden diese Häufigkeiten in einem Monatsspeicher abgelegt. Mit dieser zeitlichen Staffelung ist der Speicheraufwand sehr gering.

Für jede Messgröße wird ein derartiges Histogramm erstellt. Um nun eine Aussage bezüglich der Qualität des speisenden Netzes 18 machen zu können, werden alle Informationen zu einer einzigen Kennzahl $K_{netz}$ zusammengefasst. Dabei werden die einzelnen Abschnitte I bis IV der einzelnen Messgrößen unterschiedlich gewichtet. Die Kennzahl $K_{netz}$ wird mit folgender Gleichung:

$$K_{netz} = \sum\sum a_{ij} \cdot H_{ij} \qquad (5)$$

mit

a Gewichtungsfaktor
H Häufigkeit
i Histogrammbereiche (Abschnitte I bis IV)
j überwachte Größen (Unterspannung, Überspannung, Netzstrom...)

berechnet. Je kleiner diese Kennzahl $K_{netz}$ ist, um so höher ist die Qualität des speisenden Netzes 18. Diese Kennzahl $K_{netz}$ kann in eine Kennziffer umgerechnet werden, die die Qualität des speisenden Netzes 18 wiedergibt. Beispielsweise kann der Kehrwert der Kennzahl $K_{netz}$ gebildet werden, oder diese Kennzahl $K_{netz}$ von einer Konstanten abgezogen werden. In beiden Fällen ist die Kennziffer für eine hohe Qualität hoch und für eine geringe Qualität niedrig. Mit Verringerung der Kennziffer ausgehend vom Maximum steigt das Risiko für einen störungsfreien Betrieb des Frequenzumrichters 2.

Dieses erfindungsgemäße Verfahren lässt sich auch auf andere Umrichtertopologien übertragen.

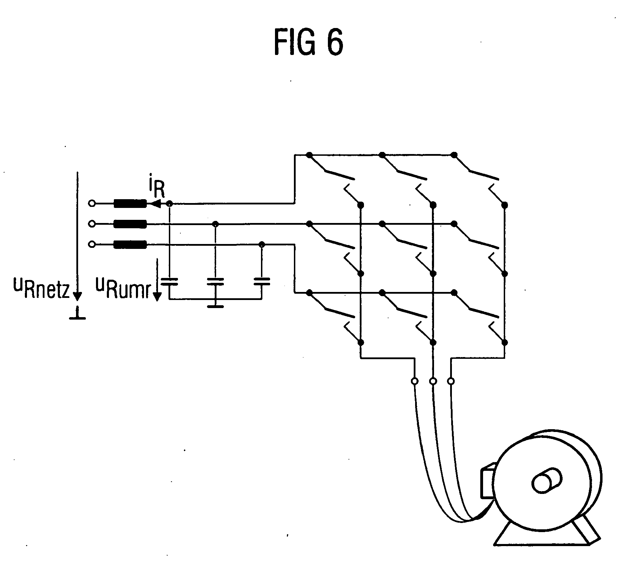

Die FIG 6 zeigt einen Frequenzumrichter mit einem **A**ctiv-**F**ront-**E**nd (AFE). Dieses AFE ist ein selbstgeführter Pulsstromrichter. Somit weist ein derartiger Frequenzumrichter netz- und lastseitig jeweils einen selbstgeführten Pulsstromrichter auf. Beim AFE ist die Qualität der Netzspannung nicht von so entscheidender Bedeutung, da die Zwischenkreisspannung $U_{ZK}$ so hoch ist, dass der netzseitige Pulsstromrichter in der Funktion Gleichrichter steuerbar bleibt und Netzfehler in der Regel beherrscht werden können. Netzfehler, beispielsweise Unterspannungen bis zu sehr tiefen Werten und sehr steile Netzspannungsänderungen, beeinträchtigen jedoch auch beim AFE den sicheren Betrieb. Für die Regelung des AFE wird der Netzstrom gemessen. Für die Analyse des speisenden Netzes kann der Betrag des gebildeten Netzstromzeigers dienen. Häufig wird sogar für die Regelung des AFE die Netzspannung direkt gemessen. Ist dies nicht der Fall, kann diese mittels folgender Gleichung:

$$u_{Rnetz} = u_{Rumr} - L \cdot di_R/dt \qquad (6)$$

berechnet werden. Dabei sind $U_{Rnetz}$ die Netzspannung der Phase R, $U_{Rumr}$ die aus der Zwischenkreisspannung $U_{ZK}$ und einem Pulsmuster bestimmte Umrichter-Eingangsspannung der Phase R, L die Induktivität der AFE-Drossel und $i_R$ der gemessene Ausgangsstrom des AFE. Für die anderen Phasen S und T wird entsprechend verfahren. Aus diesen berechneten Netzspannungen $U_{Rnetz}$, $U_{Snetz}$ und $U_{Tnetz}$ wird in bekannter Weise der Netzspannungszeiger berechnet. Diese Netzgrößen werden dann erfindungsgemäß ausgewertet.

Die FIG 7 zeigt eine weitere Umrichtertopologie. Bei dieser Umrichtertopologie ist als netzseitiger Stromrichter ein mit Netzfrequenz getakteter steuerbarer Stromrichter vorgesehen. Ein derartiger netzseitiger Stromrichter wird als Fundamental Frequency Front End (F3E) bezeichnet. Außerdem weist dieser Frequenzumrichter keinen Zwischenkreiskondensator $C_{ZK}$ mehr auf. Dafür weist dieser Frequenzumrichter eingangsseitig ein Netzfilter auf. Da Kondensatoren nur auf der Netzseite liegen, d.h., dem Frequenzumrichter vorgeschaltet sind, wird der Netzstrom als Messgröße nicht benötigt, da der durch schnelle Netzspannungswiederkehr hervorgerufene Ladestrom den Frequenzumrichter nicht belastet. Zur Steuerung des F3E wird die Zwischenkreisspannung $U_{ZK}$ direkt gemessen, die direkt zur Bearbeitung der für den Betrieb maßgeblichen Netzspannungsqualität benutzt wird.

Eine weitere Umrichtertopologie ist in der FIG 8 näher dargestellt. Bei dieser Umrichtertopologie handelt es sich um einen Matrixumrichter. Beim Matrixumrichter wird die Spannung der netzseitigen Kondensatoren gemessen. Die Netzfilterdrosseln sind jeweils so klein, dass eine an ihnen abfallende Spannung vernachlässigbar ist. Die Kondensatorspannung wird daher für die Ermittlung des Risikos für einen störungsfreien Betrieb durch Netzfehler analysiert. Der Netzstrom wird nicht benötigt, da der Umrichterstrom über den Motorstrom und ein Pulsmuster eingeprägt ist.

Mit diesem erfindungsgemäßen Verfahren ist ein an ein speisendes Netz angeschlossener Frequenzumrichter nun in der Lage, auch ohne großen Aufwand die Qualität des speisenden Netzes zu ermitteln, wodurch dann das Risiko für den störungsfreien Betrieb angegeben werden kann. Dadurch wird die Gefahr von Gerätestörungen oder Ausfällen infolge von Netzstörungen erkannt, noch bevor es zu Betriebsunterbrechung kommt. Die Anzahl der Ausfälle mit den damit verbundenen Nachteilen wie Kosten und Imageverlust wird dadurch reduziert.

**Patentansprüche**

1. Verfahren zur Ermittlung einer Kennziffer für die Qualität eines einen Frequenzumrichter (2) speisenden Netzes (18), wobei während des Betriebes dieses Frequenzumrichters (2) eine Zwischenkreisspannung ($U_{ZK}$) fortlaufend gemessen und ein netzseitiger Zwischenkreisstrom ($i_{ZKnetz}$) fortlaufend ermittelt werden, wobei diese Messgrößen ($U_{ZK}, i_{ZKnetz}$) derart mit vorbestimmten Betriebswerten des Frequenzumrichters (2) verglichen werden, dass Über- und Unterschreitungen jeweils gespeichert werden, wobei aus den Häufigkeiten ($H_{ij}$) aller Über- und Unterschreitungen eine Kennzahl ($K_{netz}$) ermittelt wird, die in eine Kennziffer umgerechnet wird.

2. Verfahren nach Anspruch 1,
**dadurch gekennzeichnet, dass** der Wertebereich einer jeden Messgröße oberhalb bzw. unterhalb eines normalen Betriebsbereiches in Abschnitte (I,II,III,IV) unterteilt ist.

3. Verfahren nach einem der Ansprüche 1 oder 2,

**dadurch gekennzeichnet, dass** jedem Abschnitt (I,II,III,IV) des Wertebereichs einer jeden Messgröße ($U_{ZK}$, $i_{ZKnetz}$) ein Gewichtungsfaktor (a) zugeordnet ist.

4. Verfahren nach einem der vorgenannten Ansprüche,
   **dadurch gekennzeichnet, dass** bei Unterschreitung einer vorbestimmten Kennziffer eine entsprechende Meldung generiert wird.

5. Verfahren nach einem der vorgenannten Ansprüche,
   **dadurch gekennzeichnet, dass** der netzseitige Zwischenkreisstrom ($i_{ZKnetz}$) in Abhängigkeit einer gemessenen Zwischenkreisspannung ($U_{ZK}$) und eines ermittelten motorseitigen Zwischenkreisstromes ($i_{ZKmotor}$) gemäß folgender Gleichung:

$$i_{ZKnetz} = C_{ZK} \cdot dU_{ZK}/dt + i_{ZKmotor}$$

berechnet wird.

6. Verfahren nach Anspruch 5,
   **dadurch gekennzeichnet, dass** der motorseitige Zwischenkreisstrom ($i_{ZKmotor}$) gemessen wird.

7. Verfahren nach Anspruch 5,
   **dadurch gekennzeichnet, dass** der motorseitige Zwischenkreisstrom ($i_{ZKmotor}$) in Abhängigkeit einer gemessenen Zwischenkreisspannung ($U_{ZK}$) und einer berechneten Motorleistung ($P_{motor}$) gemäß folgender Gleichung:

$$i_{ZKmotor} = P_{motor}/U_{ZK}$$

berechnet wird.

8. Verfahren nach Anspruch 7,
   **dadurch gekennzeichnet, dass** die Motorleistung ($P_{motor}$) in Abhängigkeit gemessener Motorströme ($i_1, i_2, i_3$) und vorbestimmter Motorspannungen ($u_1, u_2, u_3$) gemäß folgender Gleichung:

$$P_{motor} = u_1 \cdot i_1 + u_2 \cdot i_2 + u_3 \cdot i_3$$

berechnet wird.

**Claims**

1. Method for determination of a characteristic factor for the quality of a mains system (18) feeding a frequency converter (2), with an intermediate-circuit voltage ($U_{ZK}$) being measured continuously, and a mains-side intermediate-circuit current ($i_{ZKmains}$) being determined continuously during operation of this frequency converter (2), with these measurement variables ($U_{ZK}$, $i_{ZKmains}$) being compared with predetermined operating values of the frequency converter (2) in such a manner that overshoots and undershoots are in each case stored, a characteristic figure ($k_{mains}$) being determined from the frequencies ($H_{ij}$) of all overshoots and undershoots and being converted to a characteristic factor.

2. Method according to Claim 1,
   **characterized in that**
   the value range of each measurement variable above and below a normal operating range is subdivided into sections (I, II, III, IV).

3. Method according to one of Claims 1 or 2,

**characterized in that** a weighting factor (a) is allocated to each section (I,II,III,IV) of the value range of each measurement variable ($U_{ZK}$, $i_{ZKmains}$) .

4. Method according to one of the abovementioned claims, **characterized in that** an appropriate message is generated if a predetermined characteristic factor is undershoot.

5. Method according to one of the abovementioned claims, **characterized in that** the mains-side intermediate-circuit current ($i_{ZKmains}$) is calculated as a function of a measured intermediate-circuit voltage ($U_{ZK}$) and of a determined motor-side intermediate-circuit current ($i_{ZKmotor}$) using the following equation:

$$i_{ZKmains} = C_{ZK} \cdot dU_{ZK}/dt + i_{ZKmotor}.$$

6. Method according to Claim 5 **characterized in that** the motor-side intermediate-circuit current ($i_{ZKmotor}$) is measured.

7. Method according to Claim 5, **characterized in that** the motor-side intermediate-circuit current ($i_{ZKmotor}$) is calculated as a function of a measured intermediate-circuit voltage ($U_{ZK}$) and of a calculated motor power ($P_{motor}$) using the following equation:

$$i_{ZKmotor} = P_{motor}/U_{ZK}.$$

8. Method according to Claim 7, **characterized in that** the motor power ($P_{motor}$) is calculated as a function of the measured motor currents ($i_1$, $i_2$, $i_3$) and of predetermined motor voltages ($u_1$, $u_2$, $u_3$) using the following equation:

$$P_{motor} = u_1 \cdot i_1 + u_2 \cdot i_2 + u_3 \cdot i_3.$$

**Revendications**

1. Procédé de détermination d'un chiffre caractéristique pour la qualité d'un réseau ( 18 ) alimentant un convertisseur ( 2 ) de fréquences dans lequel, pendant que ce convertisseur de fréquences fonctionne, on mesure en continu une tension ( $U_{ZK}$ ) de circuit intermédiaire et on détermine en continu un courant ( $i_{ZKnetz}$ ) de circuit intermédiaire côté réseau, ces grandeurs ( $U_{ZK}$, $i_{ZKnetz}$ ) de mesure étant comparées à des valeurs de fonctionnement déterminées à l'avance du convertisseur ( 2 ) de fréquences de façon à mémoriser tout surdépassement et sous dépassement, un nombre ( $K_{netz}$ ) caractéristique qui est recalculé en un chiffre caractéristique étant déterminé à partir des fréquences ( $H_{ij}$ ) de tous les surdépassements et sous dépassements.

2. Procédé suivant la revendication 1, **caractérisé en ce que** la plage de valeurs de chaque grandeur de mesure est subdivisée en segments ( I, II, III, IV ) au-dessus et en dessous d'une plage de fonctionnement normale.

3. Procédé suivant l'une des revendications 1 ou 2, **caractérisé en ce qu'**un facteur ( a ) de pondération est associé à chaque segment ( I, II, III, IV ) de la plage de valeurs de chaque grandeur ( $U_{ZK}$, $i_{ZKnetz}$ ) de mesure.

4. Procédé suivant l'une des revendications précédentes,

**caractérisé en ce que,** si un chiffre caractéristique déterminé à l'avance est sous dépassé, on produit un message correspondant.

5. Procédé suivant l'une des revendications précédentes,
   **caractérisé en ce que** l'on calcule le courant ( $i_{ZKnetz}$ ) de circuit intermédiaire côté réseau en fonction d'une tension ( $U_{ZK}$ ) de circuit intermédiaire mesurée et d'un courant ( $i_{ZKmotor}$ ) de circuit intermédiaire côté moteur déterminé selon l'équation suivants :

$$i_{ZKnetz} = C_{ZK} \bullet dU_{ZK}/dt + i_{ZKmotor}$$

6. Procédé suivant la revendication 5,
   **caractérisé en ce que** l'on mesure le courant ( $i_{ZKmotor}$ ) de circuit intermédiaire côté moteur.

7. Procédé suivant la revendication 5,
   **caractérisé en ce que** l'on calcule le courant ( $i_{ZKmotor}$ ) du circuit intermédiaire côté moteur en fonction d'une tension ( $U_{ZK}$ ) de circuit intermédiaire mesurée et d'une puissance ( $P_{motor}$ ) du moteur calculée selon l'équation suivants :

$$i_{ZKmotor} = P_{motor}/U_{ZK}$$

8. Procédé suivant la revendication 7,
   **caractérisé en ce que** l'on calcule la puissance ( $P_{motor}$ ) du moteur en fonction de courants ( $i_1$, $i_2$, $i_3$ ) du moteur mesurés et de tensions ( $u_1$, $u_2$, $u_3$ ) du moteur déterminées à l'avance selon l'équation suivants :

$$P_{motor} = u_1 \bullet i_1 + u_2 \bullet i_2 + u_3 \bullet i_3$$

FIG 1

$i_{ZKnetz}$

$i_{ZKmotor}$

$i_{CZK}$

18

$i_R$

L

$\underline{4}$

$U_{ZK}$

$C_{ZK}$

$\underline{6}$

14

8

$i_1$

10

$i_2$

12

$i_3$

16

$u_{Rnetz}$

$\underline{2}$

EP 1 759 448 B1

9

# FIG 2

# FIG 3

FIG 4

FIG 5

11

# FIG 6